# EUROPEAN PATENT APPLICATION

(11) **EP 3 447 628 A1**
(43) Date of publication of application: **27.02.2019**
(21) Application number: 18201499.3
(22) Date of filing: 30.05.2014
(51) Int. Cl.: G06F 3/0488, G06F 17/30

(54) **PORTABLE TERMINAL AND USER INTERFACE METHOD IN PORTABLE TERMINAL**

(30) Priority: 07.06.2013 KR 20130065240
(62) Divisional of application: 14170620.0
(71) Applicant: Samsung Electronics Co., Ltd., Gyeonggi-do 16677 (KR)
(72) Inventor: YUN, Jegal, Suwon-si, Gyeonggi-do, 16677 (KR); YANG, Hui-Chul, Suwon-si, Gyeonggi-do, 16677 (KR); WATANABE, Masato, Suwon-si, Gyeonggi-do, 16677 (KR); LEE, Hyun-Woo, Suwon-si, Gyeonggi-do, 16677 (KR)
(74) Representative: HGF Limited

(57) **Abstract**

A portable terminal is provided. The portable terminal includes a display unit that configured to display a search box and to receive one or more types of inputs among a plurality of types of inputs through at least a part of the search box, and a controller configured to determine a predetermined function corresponding to the one or more types of inputs according to the one or more types of inputs among the plurality of types of inputs and to perform the predetermined function.

## Description

### TECHNICAL FIELD

The present disclosure relates to a portable terminal and a user interface method in a portable terminal.

### BACKGROUND

Recently, due to the rapid development of communication technologies, functions of portable terminals are gradually expanded, and accordingly, an increasing number of User Interfaces (UIs) and functions using the user UIs are provided.

The portable terminal has evolved from a conventional UI type in which information is input through a separate component, for example, a keyboard, a keypad, a mouse, or the like into an intuitive UI type in which information is input by directly touching a screen with a finger, a touch electronic pen, or the like or by using a voice.

For example, a smart phone corresponding to a representative portable terminal of a user has various applications (or functions, hereinafter referred to as a "function") and executes and uses the functions. Accordingly, the intuitive UI is commonly employed by the portable terminal to use the functions.

The above information is presented as background information only to assist with an understanding of the present disclosure. No determination has been made, and no assertion is made, as to whether any of the above might be applicable as prior art with regard to the present disclosure.

### SUMMARY

Certain embodiments of the present invention aim to address at least the above-mentioned problems and/or disadvantages and provide at least the advantages described below. Accordingly, an aim of certain embodiments is to provide a portable terminal having many uses, and various User Interfaces (UIs) suitable for the respective functions are required.

For example, a search function of the portable terminal receives an input value for the search from a user to perform the search and provides a result of the search. However, a UI of the search function is configured such that the user simply inputs only a keyword to be searched for into one input area through one input type. Accordingly, the user feels inconvenience. Further, the UI of the search function cannot provide the search result in various screen types, which also makes the user feel inconvenience.

Another aim of certain embodiments is to provide a portable terminal and a UI method in a portable terminal in which a user can perform an input into a plurality of input areas through various input types when using the search function in the portable terminal.

Another aim of certain embodiments is to provide a UI method in a portable terminal in which a user can input various pieces of information required for a search through various input types, rather than simply inputting only a keyword when using the search function in the portable terminal.

Another aim of certain embodiments of the present invention is to provide a portable terminal and a UI method in a portable terminal which can provide a search result in various types when the search function is used in the portable terminal.

It is an aim of certain embodiments of the invention to solve, mitigate or obviate, at least partly, at least one of the problems and/or disadvantages associated with the prior art. Certain embodiments aim to provide at least one of the advantages described below.

In accordance with an aspect of the present invention, a portable terminal is provided. The portable terminal includes a display unit configured to display a search box and to receive one or more types of inputs among a plurality of types of inputs through at least a part of the search box, and a controller configured to determine a predetermined function corresponding to the one or more types of inputs according to the one or more types of inputs among the plurality of types of inputs and to perform the predetermined function.

Another aspect of the present invention provides a portable terminal comprising:
a display unit configured to display a search box and to receive a plurality of different types of inputs (for example through at least a part of the search box); and
a controller configured, in response to the display unit receiving an input of a type corresponding to one of said plurality of different types, to select a function or action corresponding to the type of the received input from a plurality of different functions or actions each corresponding to a respective one of the plurality of different types, and to perform the selected function or action. In other words, the function or action performed by the portable terminal depends on what type of input has been received by the display unit (e.g. touch screen). The portable terminal may thus determine (or ascertain) what type of input has been received, and then perform (or execute) a function (or action) corresponding to the type of the received input. Inputting different types of input thus results in different actions or functions being performed.

In accordance with another aspect of the present invention, a UI method in a portable terminal is provided. The method includes displaying a search box, receiving one or more types of inputs among a plurality of types of inputs through at least a part of the search box, determining a predetermined function corresponding to the one or more types of inputs according to the one or more types of inputs among the plurality of types of inputs and performing the predetermined function.

Another aspect of the invention provides a method, implemented by, or for implementation by, a portable terminal, the method comprising: displaying a search box on a display unit; receiving, by the display unit, an input of a type corresponding to one of a plurality of predetermined different types of inputs (for example through at least a part of the search box); selecting a function (or action) corresponding to the type of the received input from a plurality of predetermined different functions or actions each corresponding to a respective one of the plurality of different types; and performing the selected function or action.

Another aspect of the invention provides a computer program comprising instructions arranged, when executed, to implement a method and/or apparatus in accordance with any one of the above-described (or below-described) aspects or embodiments. A further aspect provides machine-readable storage storing such a program.

Thus, in accordance with another aspect of the present invention, a non-transitory computer-readable storage medium is provided, the medium storing a UI program that, when executed, causes at least one processor to perform the above method.

According to various embodiments of the present invention, a user can perform the search function in various input types in the portable terminal and receive a search function result through various screens, thereby receiving the results with greater convenience. In other words, the user can use a variety of different input types to perform searching in different ways and/or display search results in different configurations/formats.

Further, according various embodiments of the present invention, a user can perform an input into a plurality of input areas through various input types when using the search function in the portable terminal. The search function may thus be performed in a variety of different ways, and/or be provided in a variety of different formats, depending on what type of input a user provides and/or which part(s) or portion(s) of the screen the input is provided to.

Moreover, according to various embodiments of the present invention, a user can input various pieces of information required for a search in various input types, rather than simply inputting only a keyword when using the search function in the portable terminal.

Furthermore, according to various embodiments of the present invention, a search result can be provided in various types when the search function is used in the portable terminal.

It will be appreciated from the following description that, in certain embodiments of the invention, features concerning the graphic design of user interfaces are combined with interaction steps or means to achieve a technical effect.

Certain embodiments aim to achieve the technical effect of lowering a burden (e.g. a cognitive, operative, operational, operating, or manipulative burden) of a user when performing certain computer or device interactions.

Certain embodiments aim to achieve the technical effect of providing a more efficient man-machine (user-machine) interface.

Other aspects, advantages, and salient features of the present invention and certain embodiments will become apparent to those skilled in the art from the following detailed description, which, taken in conjunction with the annexed drawings, discloses various embodiments of the present disclosure (i.e. invention).

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a block diagram of a portable terminal according to an embodiment of the present disclosure;
FIG. 2A is a front perspective view of a portable terminal according to an embodiment of the present disclosure;
FIG. 2B is a rear perspective view of a portable terminal according to an embodiment of the present disclosure;
FIGS. 3A and 3B illustrate search boxes in a portable terminal according to an embodiment of the present disclosure;
FIG. 4 illustrates a plurality of types of user inputs in a portable terminal according to an embodiment of the present disclosure;
FIGS. 5A and 5B illustrate search result display screens in a portable terminal according to an embodiment of the present disclosure;
FIG. 6 is a flowchart illustrating an operation of performing a search function in a portable terminal according to a first embodiment of the present disclosure;
FIGS. 7A, 7B, 7C, and 7D are screen examples when the search function is performed in the portable terminal according to the first embodiment of the present disclosure;
FIG. 8 is a flowchart illustrating an operation of performing a search function in a portable terminal according to a second embodiment of the present disclosure;
FIGS. 9A, 9B, 9C, 9D, and 9E are screen examples when the search function is performed in the portable terminal according to the second embodiment of the present disclosure;
FIG. 10 is a flowchart illustrating an operation of performing a search function in a portable terminal according to a third embodiment of the present disclosure;
FIGS. 11A, 11B, and 11C are screen examples when the search function is performed in the portable terminal according to the third embodiment of the present disclosure;
FIG. 12 is a flowchart illustrating an operation of performing a search function in a portable terminal according to a fourth embodiment of the present disclosure;
FIGS. 13A and 13B are screen examples when the search function is performed in the portable terminal according to the fourth embodiment of the present disclosure;
FIG. 14 is a flowchart illustrating an operation of performing a search function in a portable terminal according to a fifth embodiment of the present disclosure; and
FIGS. 15A and 15B are screen examples when the search function is performed in the portable terminal according to the fifth embodiment of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Various embodiments of the present disclosure can be applied to any device as long as the device corresponds to an electronic device which can execute a function or an application and display a screen. For example, the device may be a portable terminal, such as a mobile phone, a smart phone, or a tablet Personal Computer (PC), or a stationary terminal, such as a PC, or a monitor.

Various embodiments of the present disclosure will describe the portable terminal as an example.

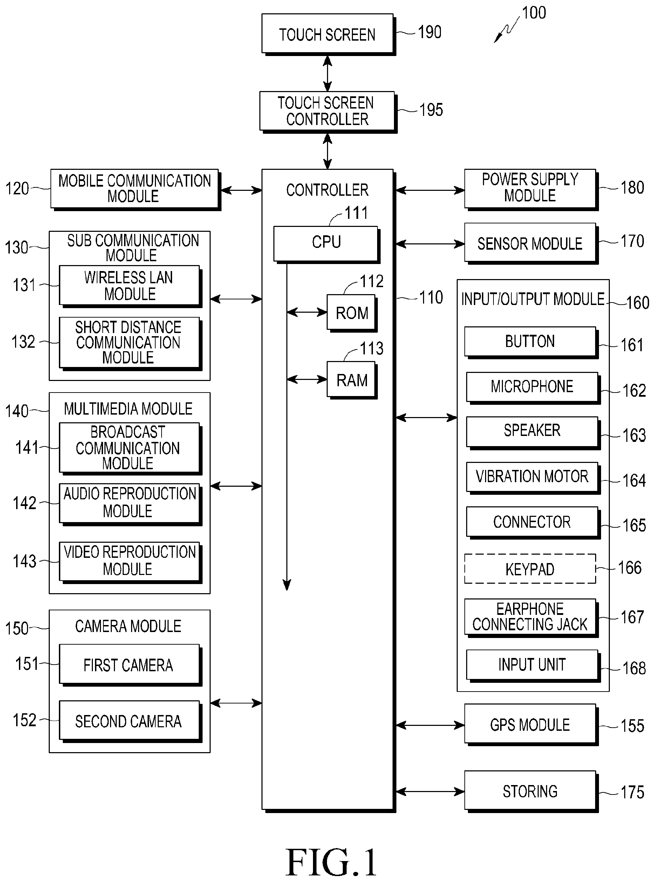

FIG. 1 is a block diagram of a portable terminal according to an embodiment of the present disclosure.

Referring to FIG. 1, a portable terminal 100 may be connected to an external device (not shown) by using a mobile communication module 120, a sub communication module 130, and a connector 165. The "external device" includes a different device (not shown) from the portable terminal 100, a mobile phone (not shown), a smart phone (not shown), a tablet PC (not shown), and a server (not shown).

Referring to FIG. 1, the apparatus 100 includes a touch screen 190 and a touch screen controller 195. Further, the apparatus 100 includes a controller 110, the mobile communication module 120, the sub communication module 130, a multimedia module 140, a camera module 150, a Global Positioning System (GPS) module 155, an input/output module 160, a sensor module 170, a storage module 175, and a power supply module 180. The sub communication module 130 includes at least one of a wireless Local Area Network (LAN) module 131 and a short distance communication module 132, and the multimedia module 140 includes at least one of a broadcasting communication module 141, an audio reproduction module 142, and a video reproduction module 143. The camera module 150 includes at least one of a first camera 151 and a second camera 152. The input/output module 160 includes at least one of a button 161, a microphone 162, a speaker 163, a vibration motor 164, the connector 165, a keypad 166, an earphone connecting jack 167, and an input unit 168.

The controller 110 may include a Central Processor Unit (CPU) 111, a Read Only Memory (ROM) 112 storing a control program for controlling the apparatus 100, and a Random Access Memory (RAM) 113 used as a storage area for storing a signal or data input from the outside of the apparatus 100 or for an operation performed in the apparatus 100. The CPU 111 may include a single core, a dual core, a triple core, or a quadruple core. The CPU 111, the ROM 112 and the RAM 113 may be connected with each other through internal buses.

The controller 110 may control the mobile communication module 120, the sub communication module 130, the multimedia module 140, the camera module 150, the GPS module 155, the input/output module 160, the sensor module 170, the storage module 175, the power supply module 180, the touch screen 190, and the touch screen controller 195. That is, the controller 110 performs a general control function of the portable terminal 100 and controls a signal flow between components.

Particularly, the controller 110 performs a predetermined function based on each of a plurality of types of inputs according to an embodiment of the present disclosure. For example, the controller 110 may perform a predetermined search function according to a plurality of types of inputs in a search box. Further, the controller 110 controls to display a search result on various search result screens.

The mobile communication module 120 enables the apparatus 100 to be connected with an external device through mobile communication by using one or more antennas (not shown) according to a control of the controller 110. The mobile communication module 120 transmits/receives a wireless signal for a voice call, a video call, a Short Message Service (SMS), or a Multimedia Message Service (MMS) to/from a mobile phone (not shown), a smart phone (not shown), a tablet PC, or another device (not shown) having a phone number input into the apparatus 100.

The sub communication module 130 may include at least one of the wireless LAN module 131 and the short distance communication module 132. For example, the sub communication module 130 may include only the wireless LAN module 131, only the short distance communication module 132, or both the wireless LAN module 131 and the short distance communication module 132.

The wireless LAN module 131 may be connected to the Internet according to a control of the controller 110 in a place where a wireless Access Point (AP) (not illustrated) is installed. The wireless LAN module 131 supports a wireless LAN standard (IEEE802.11x) of the Institute of Electrical and Electronics Engineers (IEEE). The short distance communication module 132 may wirelessly perform short distance communication between the apparatus 100 and an image forming apparatus (not shown) according to a control of the controller 110. A short distance communication scheme may include, for example, Bluetooth and Infrared Data Association (IrDA) communication.

The portable terminal 100 may include at least one of the mobile communication module 120, the wireless LAN module 131, and the short distance communication module 132 according to a capability thereof. For example, the apparatus 100 may include a combination of the mobile communication module 120, the wireless LAN module 131, and the short distance communication module 132 according to the capability thereof.

The multimedia module 140 may include the broadcasting communication module 141, the audio reproducing module 142 and the video reproducing module 143. The broadcasting communication module 141 may receive a broadcasting signal (e.g., a TeleVision (TV) broadcasting signal, a radio broadcasting signal or a data broadcasting signal) which is transmitted from a broadcasting station or broadcasting added information (e.g., Electric Program Guide (EPG) or Electric Service Guide (ESG) through a broadcasting communication antenna (not illustrated) according to a control of the controller 110. The audio reproduction module 142 may reproduce a stored or received digital audio file (e.g., a file of which the file extension is mp3, wma, ogg, or wav) according to a control of the controller 110. The video reproduction module 143 may reproduce a stored or received digital video file (e.g., a file having the file extension of mpeg, mpg, mp4, avi, mov, or mkv) according to a control of the controller 110. The video reproduction module 143 may reproduce a digital audio file.

The multimedia module 140 may include the audio reproduction module 142 and the video reproduction module 143 except for the broadcasting communication module 141. Also, the audio reproduction module 142 or the video reproduction module 143 of the multimedia module 140 may be included in the controller 110.

The camera module 150 may include at least one of the first camera 151 and the second camera 152 each of which photographs a still image or a video according to a control of the controller 110. Further, the first camera 151 or the second camera 152 may include an auxiliary light source (for example, a flash (not shown)) that provides an amount of light required for photographing. The first camera 151 may be disposed on a front surface of the apparatus 100, and the second camera 152 may be disposed on a back surface of the apparatus 100. Alternatively, the first camera 151 and the second camera 152 may be disposed to be adjacent to each other (for example, an interval between the first camera 151 and the second camera 152 is larger than 1 cm or smaller than 8 cm), and thus a three-dimensional still image or a three-dimensional video may be photographed.

The GPS module 155 may receive radio waves from a plurality of GPS satellites (not shown) in Earth's orbit and calculate a position of the apparatus 100 by using Time of Arrival (ToA) from the GPS satellites to the apparatus 100.

The input/output module 160 may include at least one of a plurality of buttons 161, the microphone 162, the speaker 163, the vibration motor 164, the connector 165, the keypad 166, the earphone connecting jack 167, and the input unit 168.

The buttons 161 may be formed on a front surface, side surface, or back surface of the housing of the apparatus 100 and may include at least one of a power button (not shown), a lock button (not shown), a volume button (not shown), a menu button, a home button, a back button, and a search button 161.

The microphone 162 receives a voice or a sound to generate an electrical signal according to a control of the controller 110.

The speaker 163 may output sounds corresponding to various signals (for example, a wireless signal, a broadcasting signal, a digital audio file, a digital video file, taking a picture or the like) of the mobile communication module 120, the sub communication module 130, the multimedia module 140, or the camera module 150 to the outside of the apparatus 100 according to a control of the controller 110. The speaker 163 may output a sound (for example, a tone corresponding to a phone call or ringing tone) corresponding to a function performed by the apparatus 100. One or more speakers 163 may be formed at a proper position or positions of the housing of the terminal 100.

The vibration motor 164 may convert an electronic signal to a mechanical vibration according to a control of the controller 110. For example, when the apparatus 100 in a vibration mode receives a voice call from another device (not shown), the vibration motor 164 is operated. One or more vibration motors 164 may be formed within the housing of the apparatus 100. The vibration motor 164 may be operated in response to a user's touch action that touches the touch screen 190 and a continuous touch movement on the touch screen 190.

The connector 165 may be used as an interface which interconnects the apparatus 100 and an external apparatus (not shown) or a power source (not shown). The apparatus 100 may transmit data stored in the storage module 175 of the apparatus 100 to an external device (not shown) or receive data from an external device (not shown) through a wired cable connected to the connector 165 according to a control of the controller 110. The apparatus 100 may receive power from a power source (not shown) through the wired cable connected to the connector 165 or charge a battery (not shown).

The keypad 166 may receive a key input from the user to control the apparatus 100. The keypad 166 includes a physical keypad (not shown) formed on the apparatus 100 or a virtual keypad (not shown) displayed on the touch screen 190. The physical keypad (not shown) formed on the portable terminal 100 may be excluded according to a capability or structure of the apparatus 100.

An earphone (not shown) may be inserted into the earphone connecting jack 167 to be connected with the portable terminal 100, and the input unit 168 may be a stylus pen. The input unit 168 may be inserted into and stored within the portable terminal 100 and withdrawn or detached from the portable terminal 100 when being used.

The sensor module 170 includes at least one sensor for detecting a state of the apparatus 100. For example, the sensor module 170 may include a proximity sensor that detects whether the user approaches the apparatus 100, an illumination sensor (not shown) that detects the amount of light around the apparatus 100, or a motion sensor (not illustrated) that detects the motion of the apparatus 100 (for example, rotation of the apparatus 100, or acceleration or vibration applied to the apparatus 100). At least one sensor may detect the state, generate a signal corresponding to the detection, and transmit the generated signal to the controller 110. The sensors of the sensor module 170 may be added or omitted according to a capability of the apparatus 100.

The storage module 175 may store signals or data input/output in response to the operations of the mobile communication module 120, the sub communication module 130, the multimedia module 140, the camera module 150, the GPS module 155, the input/output module 160, the sensor module 170, and the touch screen 190 according to a control of the controller 110. The storage module 175 may store a control program and applications for controlling the portable terminal 100 or the controller 110

Particularly, the storage module 175 may include information on a User Interface (UI) provided by the portable terminal 100 according to an embodiment of the present disclosure. The information on the UI includes one or more input types, and inputs according the one or more input types.

The term "storage module" includes the storage module 175, the ROM 112 and the RAM 113 within the controller 110, or a memory card (not shown) (for example, a Secure Digital (SD) card or a memory stick) installed in the apparatus 100. The storage module 175 may include a non-volatile memory, a volatile memory, a Hard Disc Drive (HDD) or a Solid State Drive (SDD).

The power supply module 180 may supply power to one or more batteries (not shown) arranged at the housing of the apparatus 100 according to a control of the controller 110. The one or more batteries (not shown) may supply power to the apparatus 100. Further, the power supply module 180 may supply power input from an external power source (not shown) through a wired cable connected to the connector 165 to the apparatus 100.

The touch screen 190 may provide UIs corresponding to various services (for example, phone communication, data transmission, broadcasting, and photographing a picture) to the user. The touch screen 190 may transmit an analog signal corresponding to one or more touches input into the UI to the touch screen controller 195. The touch screen 190 may receive one or more touches through a user's body (for example, fingers including a thumb) or a touchable input means (for example, a stylus pen). Also, the touch screen 190 may receive a continuous movement of one touch among the one or more touches. The touch screen 190 may transmit an analog signal corresponding to the continuous movement of the input touch to the touch screen controller 195.

Particularly, the touch screen 190 according to an embodiment of the present disclosure may display a search screen corresponding to a search function under a control of the controller 110. At this time, the touch screen 190 may display a search box 30 on the search screen. When there is a user input in a state where the search box 30 is displayed under a control of the controller 110, the touch screen 190 may determine an input type and transmit information on the corresponding type to the controller 110. The user input may be divided into a plurality of types.

The touch according to the present disclosure is not limited to a touch between the touch screen 190 and the user's body or the touchable input means, but may include a non-touch (for example, a case where a detectable interval between the touch screen 190 and the user's body or the touchable input means is equal to or smaller than 1 mm). An interval detectable by the touch screen 190 may vary depending on a capability of structure of the portable terminal 100. The touch screen 190 may be implemented in various types, such as a resistive type, a capacitive type, an infrared type, an Electronic Magnetic Resonance (EMR) type, and an acoustic wave type, or implemented by a combination of one or more types thereof.

The touch screen controller 195 converts an analog signal received from the touch screen 190 to a digital signal (for example, X and Y coordinates) and transmits the digital signal to the controller 110. The controller 110 may control the touch screen 190 by using the digital signal received from the touch screen controller 195. For example, the controller 110 may cause a shortcut icon (not shown) displayed on the touch screen 190 to be selected or may execute the shortcut icon (not shown) in response to a touch. Further, the touch screen controller 195 may be included in the controller 110.

In addition, the controller 110 may detect various user inputs received through the camera module 150, the input/output module 160, and the sensor module 170 as well as the touch screen 190. The user input may include various types of information input into the apparatus 100, such as a gesture, a voice, a pupil action, and a bio signal of the user as well as the touch. The controller 110 may control a predetermined operation or function corresponding to the detected user input to be performed within the apparatus 100.

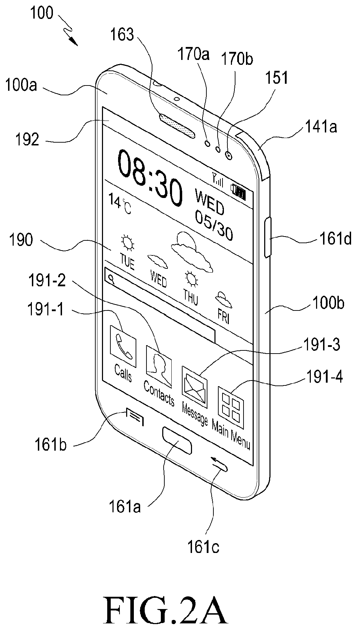

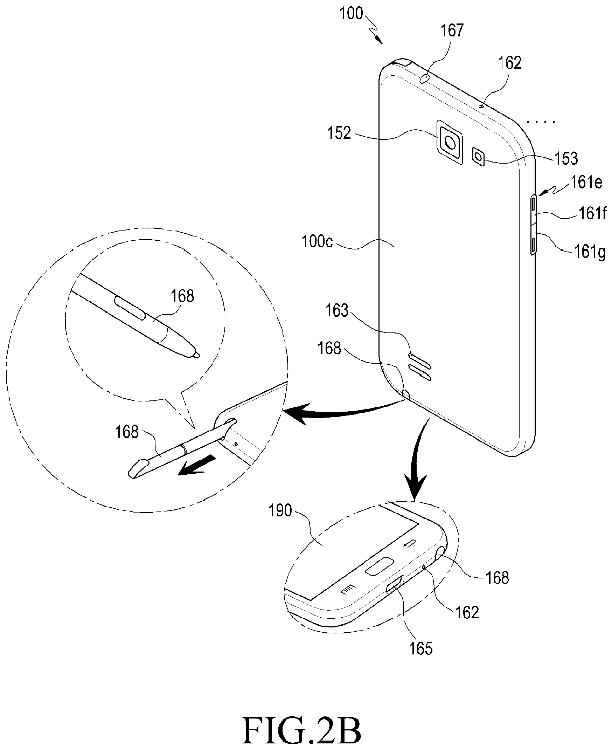

FIG. 2A is a front perspective view of the portable terminal according to an embodiment of the present disclosure, and FIG. 2B is a rear perspective view of the portable terminal according to an embodiment of the present disclosure.

Referring to FIGS. 2A and 2B, the screen 190 is disposed on a center of a front surface 100a of the portable terminal 100. The touch screen 190 may be largely formed to occupy most of the front surface 100a of the portable terminal 100. FIG. 2A shows an example where a main home screen is displayed on the touch screen 190. The main home screen is a first screen displayed on the touch screen 190 when power of the portable terminal 100 is turned on. Further, when the portable terminal 100 has different home screens of several pages, the main home screen may be a first home screen of the home screens of several pages. Shortcut icons 191-1, 191-2, and 191-3 for executing frequently used applications, a main menu switching icon 191-4, time, weather and the like may be displayed on the home screen. The main menu switching icon 191-4 displays a menu screen on the touch screen 190. Further, at the top end of the touch screen 190, a status bar 192 indicating a status of the apparatus 100, such as a battery charging status, intensity of a received signal, and current time, may be formed.

A home button 161a, a menu button 161b, and a back button 161c may be formed at a lower end of the touch screen 190.

The home button 161a displays the main home screen on the touch screen 190. For example, when the home button 161a is touched in a state where any home screen different from the main home screen or the menu screen is displayed on the touch screen 190, the main home screen may be displayed on the touch screen 190. Further, when the home button 191a is touched while applications are executed on the touch screen 190, the main home screen shown in FIG. 2A may be displayed on the touch screen 190. In addition, the home button 161a may be used to display recently used applications or a task manager on the touch screen 190.

The menu button 161b provides a connection menu which can be used on the touch screen 190. The connection menu may include a widget addition menu, a background image changing menu, a search menu, an editing menu, an environment setup menu and the like. The back button 161c may be used for displaying the screen which was executed just before the currently executed screen or terminating the most recently used application.

The first camera 151, an illumination sensor 170a, and a proximity sensor 170b may be disposed on edges of the front surface 100a of the portable terminal 100. The speaker 163 may be disposed on the front surface 100a of the portable terminal 100. The second camera 152, a flash 153, and another speaker 163 may be disposed on a rear surface 100c of the portable terminal 100.

For example, a power button 161d, a volume button 161e including volume up button 161f and volume down button 161g, a terrestrial Digital Multimedia Broadcasting (DMB) antenna 141a for receiving broadcasts, and one or more microphones 162 may be disposed on a side surface 100b of the portable terminal 100. The DMB antenna 141a may be fixed to the portable terminal 100 or may be formed to be detachable from the portable terminal 100.

Further, the connector 165 is formed on a lower side surface of the portable terminal 100. A plurality of electrodes is formed on the connector 165, and the connector 165 may be connected to an external device through a wire. The earphone connecting jack 167 may be formed on an upper side surface of the portable terminal 100. An earphone may be inserted into the earphone connecting jack 167.

Further, the input unit 168 may be formed on a lower side surface of the portable terminal 100. The input unit 168 may be inserted into and stored in the portable terminal 100, and withdrawn and detached from the portable terminal 100 when being used. The input unit 168 may be a stylus pen or the like.

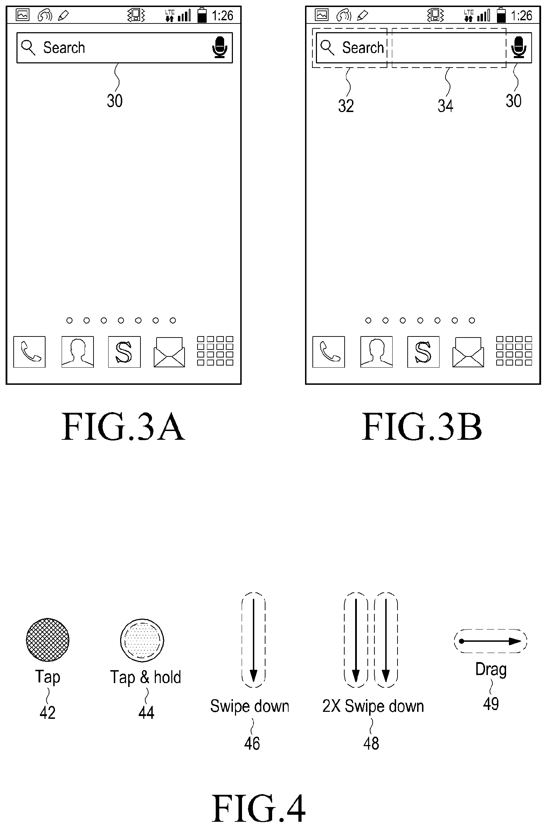

According to an embodiment of the present disclosure, the portable terminal 100 configured as described above may include one or more input areas in a search box (e.g., search box 30 of FIGS. 3A and 3B) and receive various types of user inputs by the one or more input areas to perform a search. The search may include a search within the portable terminal 100, for example, a widget search, a music search, or an application search, and also include a web search, a music search, or an application search outside the portable terminal 100. The search may further include various types of searches as well as the above listed examples.

FIGS. 3A and 3B illustrate the search box 30 in the portable terminal 100 according to an embodiment of the present disclosure, and FIG. 4 illustrates a plurality of types of user inputs in the portable terminal 100 according to an embodiment of the present disclosure.

Referring to FIGS. 3A and 3B first, the portable terminal 100 may receive a plurality of types of user inputs through the search box 30 as one input area as illustrated in FIG. 3A. Further, the portable terminal 100 may have two input areas, for example, a first input area 32 and a second input area 34 in the search box 30 and receive a plurality of types of user inputs through each of the first and second input areas 32 and 34 as illustrated in FIG. 3B. According to one of the plurality of types of user inputs, the portable terminal 200 may determine a predetermined function corresponding to one type of input among the plurality of types of user inputs and perform the predetermined function.

Referring to FIG. 4, a plurality of types of user inputs may include a first type input to a fifth type input.

For example, when there is a first type input 42 (e.g., a tap) in the search box 30, the portable terminal 100 may receive a search keyword. The portable terminal 100 may display selectable search engines and receive a selection of the search engine through which the search is to be performed when there is a second type input in the search box 30. When there is a third type input, the portable terminal 100 may display a recent search history. When there is a fourth type input, the portable terminal 100 may display a search result of a recent search keyword. When there is a fifth type input, the portable terminal 100 may display search results of recent search keywords such that the search results are distinguished from each other.

According to various embodiments of the present disclosure, the first type input to the fifth type input may include user gestures, such as a tap 42, a tap & hold 44, a swipe down 46, a 2X swipe down 48 (which may also be described as a double swipe down, or a repeated swipe down, or a swipe down with two fingers or two input units simultaneously, or a first swipe down followed quickly, i.e. within a predetermined period of time, by a second swipe down) and a drag 49, respectively.

The tap 42 corresponds to a user gesture of quickly and lightly hitting a screen with one finger (or the input unit 185), and may be one of a single tap, double tap, triple tap, and quadruple tap. The tap & hold 44 may be a user gesture of holding a finger (or the input unit 185) on a screen until a screen element appears. The tap & hold 44 may correspond to a touch & hold. The swipe down 46 may be a user gesture of moving one finger (or the input unit 185) in a vertically downward direction while touching a screen. The 2X swipe down 48 may be a user gesture of moving two fingers (or the input unit 185) in a vertically downward direction while touching a screen. The drag 49 may be a user gesture of moving or scrolling a screen element. Meanwhile, the first type input to the fifth type input may be other gestures different from the above described user gestures.

According to an embodiment of the present disclosure, the portable terminal 100 may display a search result through a search function on various search result screens according to which type of user input is received among the plurality of types of user inputs.

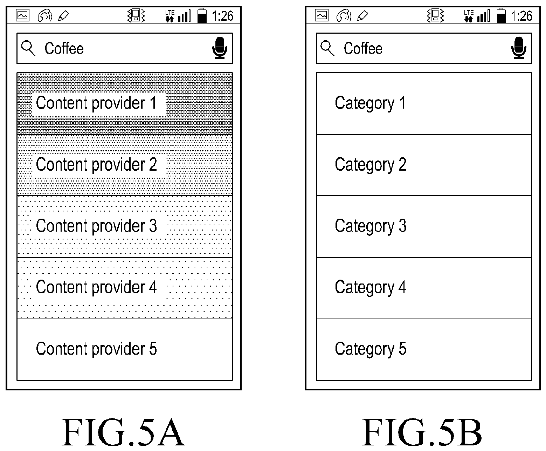

FIGS. 5A and 5B illustrate search result display screens in the portable terminal 100 according to an embodiment of the present disclosure.

Referring to FIGS. 5A and 5B, the portable terminal 100 may display a search result on different search result screens according to which type of user input is received among the plurality of types of user inputs.

For example, when coffee is searched for by using one type (e.g. a first type) of user input among a plurality of types of user inputs, the portable terminal 100 may display search results of coffee distinguished according to respective content providers (content provider 1 to content provider 5) as illustrated in FIG. 5A. When coffee is searched for by using a different type (e.g. a second type) of user input among a plurality of types of user inputs, the portable terminal 100 may display search results of coffee distinguished according to respective categories (category 1 to category 5) as illustrated in FIG. 5B.

Hereinafter an operation of the portable terminal 100 according to each of the plurality of types of inputs will be described.

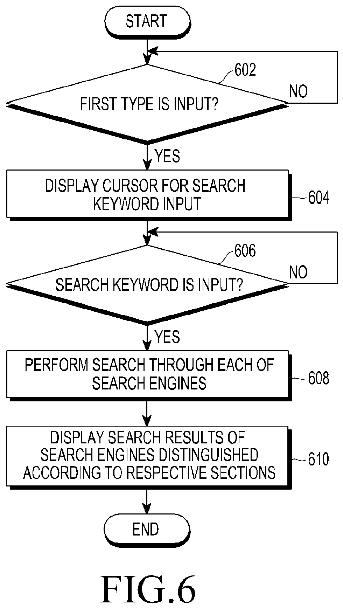

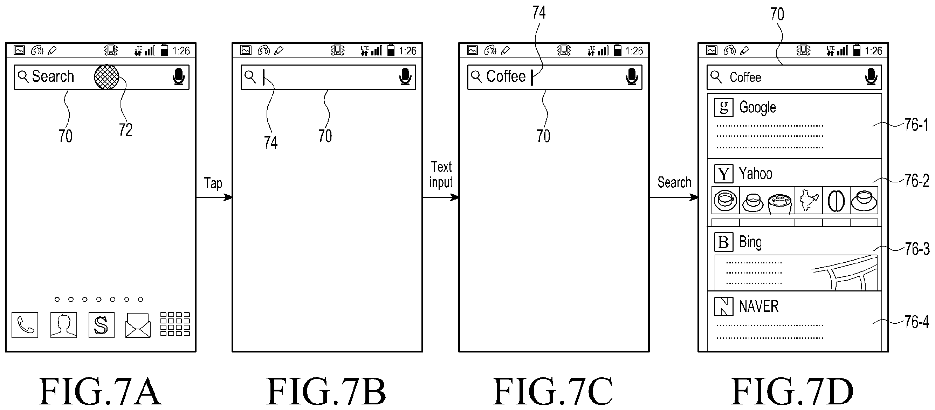

FIG. 6 is a flowchart illustrating a UI method when the portable terminal 100 performs the search function according to a first embodiment of the present disclosure, and FIGS. 7A to 7D illustrate screen examples when the portable terminal 100 performs the search function according to the first embodiment of the present disclosure.

Referring to FIGS. 6 and FIGS. 7A to 7D, the portable terminal 100 determines whether there is a first type input in operation 602. For example, the portable terminal 100 determines whether there is an input of a tap 72 in a search box 70 as illustrated in FIG. 7A. When the search box 70 is divided into two areas including a first area and a second area, the tap 72 may be input into one of the first area and the second area.

When the tap 72 is input, the portable terminal 100 displays a cursor for a search keyword input in operation 604. For example, the portable terminal 100 may display a cursor 74 for a keyword input on the search box 70 as illustrated in FIG. 7B, and receive a keyword from the user. The user may receive a keyword through a keyboard arranged on the touch screen 190 or a separate keypad.

The portable terminal 100 determines whether a search keyword is input in operation 606. For example, the portable terminal 100 determines whether a search keyword, such as coffee, is input into the search box 70 as illustrated in FIG. 7C.

When the search keyword is input, the portable terminal 100 searches for the keyword through each of a plurality of search engines in operation 608. The plurality of search engines may be provided by providers of different search engines, such as the Yahoo search engine, the Google search engine, the Bing search engine, the Naver search engine, and the Daum search engine.

The portable terminal 100 displays a search result of each search engine distinguished according to each section in operation 610. For example, as illustrated in FIG. 7D, search results 76-1 to 76-4 of coffee through the respective search engines are displayed such that the search results 76-1 to 76-4 are distinguished according to respective sections. In other words, the search results obtained by the different search engines are displayed in different respective portions of the display screen, i.e. with each portion displaying search results from a respective one of the plurality of search engines.

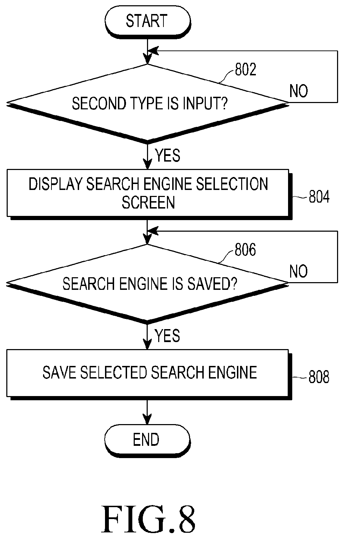

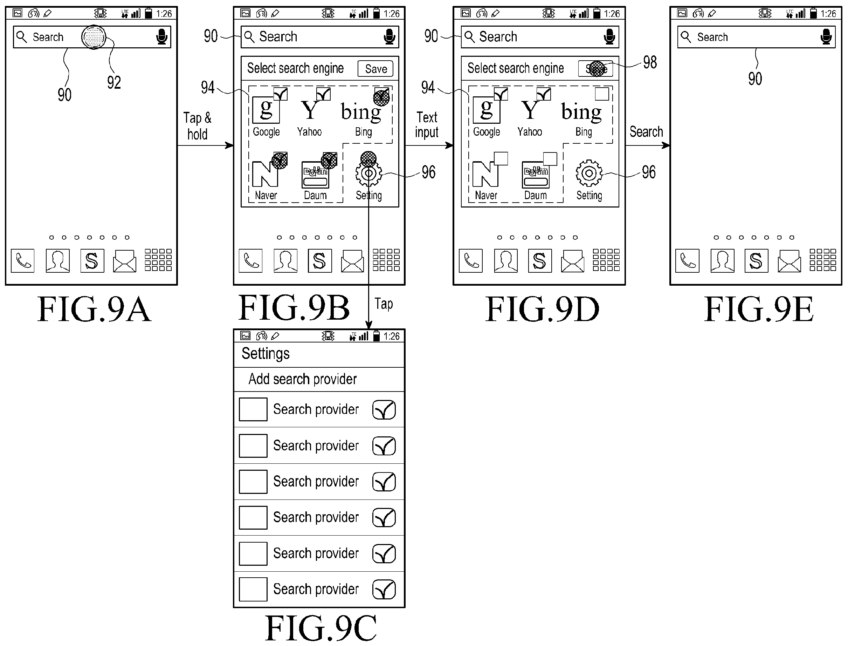

FIG. 8 is a flowchart illustrating a UI method when the portable terminal 100 performs the search function according to a second embodiment of the present disclosure, and FIGS. 9A to 9E illustrate screen examples when the portable terminal 100 performs the search function according to the second embodiment of the present disclosure.

Referring to FIG. 8 and FIGS. 9A to 9E, the portable terminal 100 determines whether there is a second type input in operation 802. For example, the portable terminal 100 determines whether there is an input of a tap & hold (or touch & hold) 92 in a search box 90 as illustrated in FIG. 9A. When the search box 90 is divided into a first area and a second area, the tap & hold (or touch & hold) 92 may be input into one of the first area and the second area.

When the tap & hold 92 is input, the portable terminal 100 displays a search engine selection screen in operation 804. For example, the portable terminal 100 may display a search engine selection screen including a plurality of search engines 94 as illustrated in FIG. 9B. The plurality of search engines 94 may include some of the Google search engine, the Yahoo search engine, the Bing search engine, the Naver search engine, and the Daum search engine. The plurality of search engines 94 may further include other search engines. The search engine selection screen including the plurality of search engines 94 may display the respective search engines and selection check boxes through which the search engines can be selected. The user can select one or more desired search engines by checking the selection check box through a tap or touch. As illustrated in FIG. 9B, the user may select the Bing search engine, the Naver search engine, and the Daum search engine from the plurality of search engines. At this time, when the user checks again the selection check boxes of the selected search engines through the tap or touch, states of the selected search engines may be changed into a non-selected state. Further, the portable terminal 100 may display a setting 96 on the search engine selection screen. The setting 96 corresponds to an item through which the search engine can be added or removed according to a search engine addition request by the user. For example, when the setting 96 is selected by the user, the portable terminal 100 may display a setting screen for adding or removing the search engine as illustrated in FIG. 9C. One or more search engine providers (search providers) which can be added or removed may be displayed on the setting screen. The user may add a search engine by selecting a search engine provider which the user desires to add. The user may remove a search engine by selecting a search engine provider which the user desires to remove.

When the search engine is selected by the user, the portable terminal 100 determines whether there is a selected search engine saving request by the user in operation 806. For example, when "Save" 98 is selected in a state where the search engines are selected as illustrated in FIG. 9D, the portable terminal 100 may determine that there is the selected search engine saving request by the user.

The portable terminal 100 may save the selected search engine according to the search engine saving request in operation 808. When the search engine is saved, the portable terminal 100 may display a search screen as illustrated in FIG. 9E.

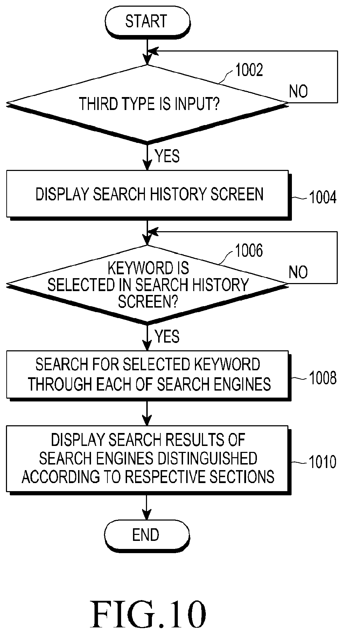

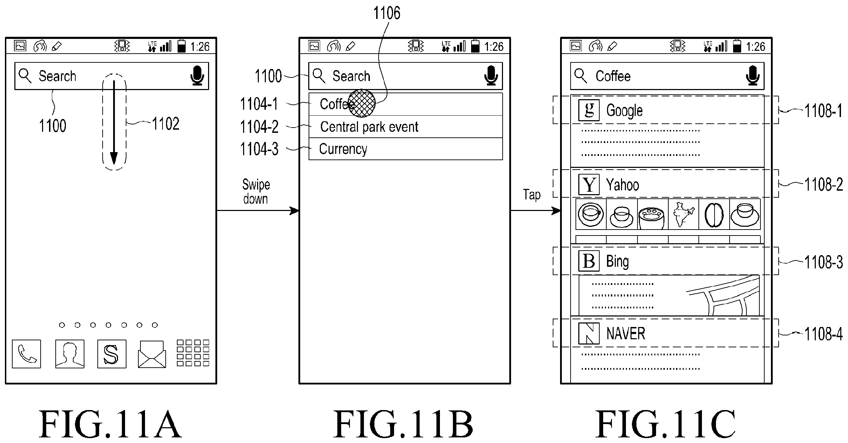

FIG. 10 is a flowchart illustrating a UI method when the portable terminal 100 performs the search function according to a third embodiment of the present disclosure, and FIGS. 11A to 11C illustrate screen examples when the portable terminal 100 performs the search function according to the third embodiment of the present disclosure.

Referring to FIG. 10 and FIGS. 11A to 11C, the portable terminal 100 determines whether there is a third type input in operation 1002. For example, the portable terminal 100 may determine whether there is an input of a swipe down 1102 in a search box 1100 as illustrated in FIG. 11A. When the search box 1100 has a plurality of areas, the portable terminal 100 may determine whether there is the input of the swipe down 1102 in one of the plurality of areas.

When the swipe down 1102 is input, the portable terminal 100 may display a search history screen in operation 1004. For example, the portable terminal 100 may display a search history screen including previously searched keywords 1104-1 to 1104-3 as illustrated in FIG. 11B.

The portable terminal 100 determines whether a keyword is selected in the search history screen in operation 1006. For example, the portable terminal 100 may select a keyword from the previously searched keywords 1104-1 to 1104-3 according to a tap or touch input 1106 by the user.

When the keyword is selected, the portable terminal 100 may search for the selected keyword through each of a plurality of search engines in operation 1008. The plurality of search engines may be selected or set in advance.

The portable terminal 100 displays a search result of each search engine distinguished according to each section in operation 1010. For example, as illustrated in FIG. 11C, search results 1108-1 to 1108-4 of coffee through the respective search engines are displayed such that the search results 1108-1 to 1108-4 are distinguished according to respective sections.

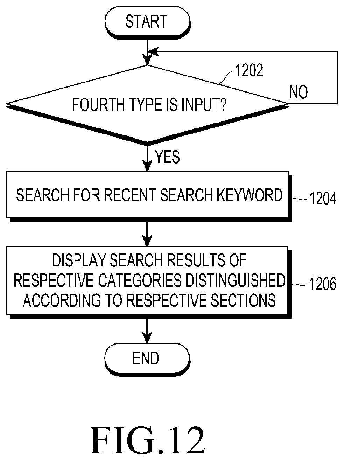

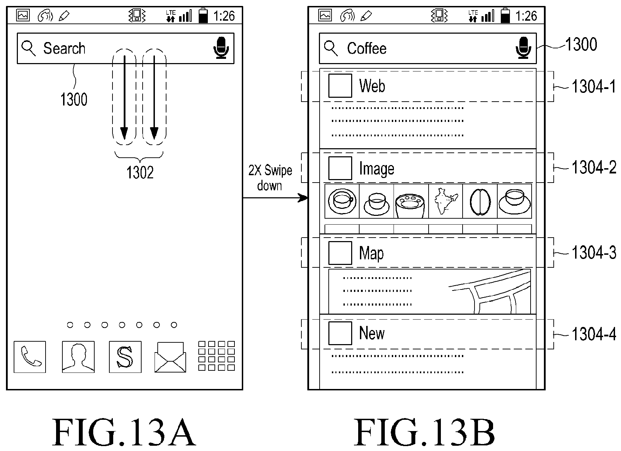

FIG. 12 is a flowchart illustrating a UI method when the portable terminal 100 performs the search function according to a fourth embodiment of the present disclosure, and FIGS. 13A and 13B illustrate screen examples when the portable terminal 100 performs the search function according to the fourth embodiment of the present disclosure.

Referring to FIG. 12 and FIGS. 13A and 13B, the portable terminal 100 determines whether there is a fourth type input in operation 1202. For example, the portable terminal 100 may determine whether there is an input of a 2X swipe down 1302 in a search box 1300 as illustrated in FIG. 13A. When the search box 1300 has a plurality of areas, the portable terminal 100 may determine whether there is the input of the 2X swipe down 1302 in one of the plurality of areas.

When the 2X swipe down 1302 is input, the portable terminal 100 may search for a recent search keyword in operation 1204. At this time, the portable terminal 100 may search for the recent search keyword through each of a plurality of search engines. Each of the search engines may provide a search result of the keyword according to each category.

The portable terminal 100 displays the search result of the recent search keyword distinguished according to each section in operation 1206. For example, the portable terminal 100 may display search results distinguished according to respective sections based on first to fourth categories 1304-1 to 1304-4. The first to fourth categories 1304-1 to 1304-4 may include categories, such as a webpage, an image, a map, news, and the like. Further, the categories may include other categories, such as a video, a shopping, a blog, and the like.

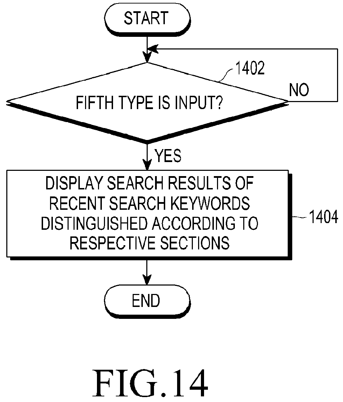

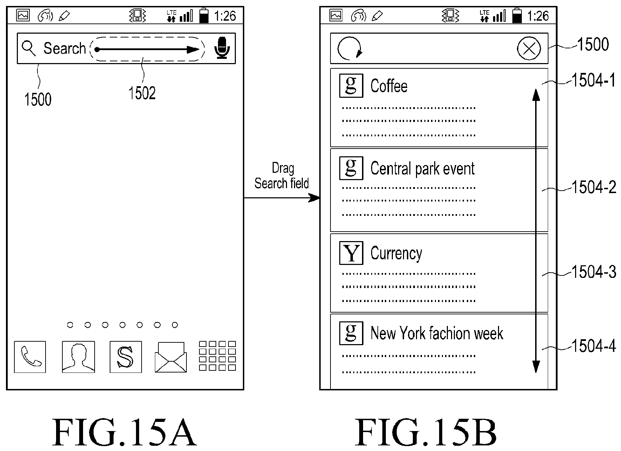

FIG. 14 is a flowchart illustrating a UI method when the portable terminal 100 performs the search function according to a fifth embodiment of the present disclosure, and FIGS. 15A and 15B illustrate screen examples when the portable terminal 100 performs the search function according to the fifth embodiment of the present disclosure.

Referring to FIG. 14 and FIGS. 15A and 15B, the portable terminal 100 determines whether there is a fifth type input in operation 1402. For example, the portable terminal 100 may determine whether there is an input of a drag 1502 in a search box 1500 as illustrated in FIG. 15A.

When the drag 1502 is input, the portable terminal 100 displays search results of recent search keywords distinguished according to respective sections in operation 1404. For example, the portable terminal 100 may display first to fourth recent keyword search results 1504-1 to 1504-4 distinguished according to respective sections as illustrated in FIG. 15B. The first recent keyword search result 1504-1 may be a search result of coffee, the second recent keyword search result 1504-2 may be a search result of Central park event, the third recent keyword search result 1504-3 may be a search result of currency, and the fourth recent keyword search result 1504-4 may be a search result of New York fashion week. The first to fourth recent keyword search results 1504-1 to 1504-4 may be displayed in a chronological order.

According to the various embodiments of the present disclosure, the user can perform the search function in various input types in the portable terminal and receive a search function result through various screens, thereby receiving the convenience.

The methods according to the various embodiments of the present disclosure may be implemented in a form of program commands executable through various computer means to be recorded in a non-transitory computer-readable medium. The non-transitory computer-readable medium may include a program command, a data file, and a data structure individually or a combination thereof. The program command recorded in the medium may be designed and configured specifically for the present disclosure or may be known and used by those skilled in the computer software field.

The UI method in the search function of the portable terminal according to various embodiments of the present disclosure can be implemented by hardware, software, or a combination thereof. Any such software may be stored, for example, in a volatile or non-volatile storage device, such as a ROM, a memory, such as a RAM, a memory chip, a memory device, or a memory Integrated Circuit (IC), or an optically or magnetically recordable and machine-readable storage medium, such as a Compact Disc (CD), a Digital Versatile Disc (DVD), a magnetic disk, or a magnetic tape, regardless of its ability to be erased or its ability to be re-recorded. The UI method in the search function of the portable terminal according to the various embodiments of the present disclosure may be implemented by a computer or portable terminal including a controller and a memory, and the memory is one example of a program including instructions realizing the various embodiments of the present disclosure or a machine-readable storage medium suitable for storing programs. Accordingly, the various embodiments of the present disclosure includes a program including a code for implementing the apparatus or method described in the appended claims of the specification and a non-transitory machine (a computer or the like)-readable storage medium for storing the program. Further, such a program may be electronically transferred through a predetermined medium, such as a communication signal transferred through a wired or wireless connection, and the present disclosure properly includes the equivalents thereof.

In addition, the portable terminal according to the various embodiments of the present disclosure may receive the program from a program providing apparatus connected to the portable terminal wirelessly or through a wire and store the received program. The program providing apparatus may include a non-transitory memory for storing a program including instructions for implementing the UI method according to various embodiments of the present disclosure, a communication unit for performing wired or wireless communication with the portable terminal, and a controller for controlling to transmit the corresponding program through the communication unit automatically or according to a request by the portable terminal.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

While the present disclosure has been shown and described with reference to various embodiments thereof, it will be understood by those skilled in the art that various changes in form and details may be made therein without departing from the spirit and scope of the present disclosure as defined by the appended claims and their equivalents.

### ANNEX

It will also be appreciated that certain aspects and embodiments of the invention provide subject matter in accordance with the following numbered paragraphs:
Paragraph 1. A portable terminal comprising:
   a display unit configured to display a search box and to receive one or more types of inputs among a plurality of types of inputs through at least a part of the search box; and
   a controller configured to determine a predetermined function corresponding to the one or more types of inputs according to the one or more types of inputs among the plurality of types of inputs and to perform the predetermined function.
Paragraph 2. The portable terminal of Paragraph 1, wherein the search box includes one or more input areas and receives the one or more types of inputs among the plurality of types of inputs through the one or more input areas, respectively.
Paragraph 3. The portable terminal of Paragraph 1 or Paragraph 2, wherein the controller is configured to perform at least one of:
   select a keyword according to the one or more types of inputs and search for the selected keyword through each of one or more search engines;
   control to display search results of search engines through respective sections according to respective search engines based on the one or more types of inputs; and control to display search results of search engines through respective sections according to respective categories based on the one or more types of inputs.
Paragraph 4. The portable terminal of any of Paragraphs 1 to 3, wherein the plurality of types of inputs include at least one of a tap, a tap & hold, a swipe down, a 2X swipe down, and a drag.
Paragraph 5. The portable terminal of Paragraph 4, wherein the controller is configured to perform at least one of:
   control to display a cursor for a search keyword input according to an input of the tap, to select a search keyword input by a user, and to search for the selected keyword through each of one or more search engines:
   control to display a search history screen according to an input of the swipe down, to select a search keyword in the search history screen, and to search for the selected keyword through each of one or more search engines;
   select a recent search keyword according to an input of the 2X swipe down and to search for the selected keyword through each of one or more search engines; and
   select recent search keywords according to an input of the drag and to search for the selected recent search keywords through each of one or more search engines.
Paragraph 6. The portable terminal of any of Paragraphs 1 to 5, wherein the controller is configured to control to display a search engine selection screen according to the one or more types of inputs and to save one or more selected search engines.
Paragraph 7. A User Interface (UI) method in a portable terminal, the method comprising:
   displaying a search box;
   receiving one or more types of inputs among a plurality of types of inputs through at least a part of the search box;
   determining a predetermined function corresponding to the one or more types of inputs according to the one or more types of inputs among the plurality of types of inputs; and
   performing the predetermined function.
Paragraph 8. The method of Paragraph 7, wherein the search box includes one or more input areas and receives the one or more types of inputs among the plurality of types of inputs through the one or more input areas, respectively.
Paragraph 9. The method of Paragraph 7 or Paragraph 8, wherein the performing of the predetermined function comprises:
   selecting a keyword according to the one or more types of inputs; and
   searching for the selected keyword through each of one or more search engines.
Paragraph 10. The method of Paragraph 7 or Paragraph 8, wherein the performing of the predetermined function comprises:
   displaying search results of the search engines through respective sections according to respective search engines based on the one or more types of inputs.
Paragraph 11. The method of Paragraph 7 or Paragraph 8, wherein the performing of the predetermined function comprises:
   displaying search results of the search engines through respective sections according to respective categories based on the one or more types of inputs.
Paragraph 12. The method of any one of Paragraphs 7 to 11, wherein the plurality of types of inputs include at least one of a tap, a tap & hold, a swipe down, a 2X swipe down, and a drag.
Paragraph 13. The method of Paragraph 12, wherein the searching for the selected keyword through each of one or more search engines comprises at least one of:
   displaying a cursor for a search keyword input according to an input of the tap, and selecting a search keyword input by a user and searching for the selected keyword through each of one or more search engines;
   displaying a search history screen according to an input of the swipe down, selecting a search keyword in the search history screen, and searching for the selected keyword through each of one or more search engines;
   selecting a recent search keyword according to an input of the 2X swipe down, and searching for the selected keyword through each of one or more search engines; and
   selecting recent search keywords according to an input of the drag, and searching for the selected recent search keywords through each of one or more search engines.
Paragraph 14. The method of any one of Paragraphs 7 to 13, further comprising:
   displaying a search engine selection screen according to the one or more types of inputs; and
   saving one or more selected search engines.
Paragraph 15. A non-transitory computer-readable storage medium storing a User Interface (UI) program that, when executed, causes at least one processor to perform the method of any one of Paragraphs 7 to 14.

## Claims

1. A portable terminal comprising:
a display configured to:
display a search box comprising a first input area and a second input area, and
receive one or more gesture inputs, among a plurality of different types of gesture inputs, through at least one of the first input area or the second input area; and
at least one processor configured to:
determine a first function, among a plurality of different search functions, based on receiving a first type of gesture input,
display a search history based on the first function,
determine a second function, among the plurality of different search functions, based on receiving a second type of gesture input after displaying the search history, and
select a keyword on the search history and display a search result of the selected keyword based on the second function.

2. The portable terminal of claim 1, wherein the at least one processor is further configured to search for the selected keyword through each of one or more search engines.

3. The portable terminal of claim 2, wherein the at least one processor is further configured to display search results of the one or more search engines through respective sections according to respective search engines.

4. The portable terminal of claim 2, wherein the at least one processor is further configured to display search results of the one or more search engines through respective sections according to respective categories.

5. The portable terminal of claim 1, wherein the plurality of different types of gesture inputs comprises at least one of a tap, a tap & hold, a swipe down, a 2X swipe down or a drag, and the first type of gesture input is different from the second type of gesture input.

6. The portable terminal of claim 5, wherein the at least one processor is further configured to:
display a cursor for a search keyword input according to an input of the tap, and
select the at least one search keyword input by a user.

7. The portable terminal of claim 5, wherein the at least one processor is further configured to:
display a search history screen according to an input of the swipe down, and
select the at least one search keyword in the search history screen.

8. The portable terminal of claim 5, wherein the at least one processor is further configured to select at least one search keyword based on a recent search keyword according to an input of the 2X swipe down.

9. The portable terminal of claim 5, wherein the at least one processor is further configured to select recent search keywords according to an input of the drag.

10. The portable terminal of claim 1, wherein the at least one processor is further configured to:
display a search engine selection screen according to the second type of gesture input, among the plurality of different types of gesture inputs, through one of the first area or the second area, and
save one or more selected search engines.

11. A method for using a user interface (UI) of a portable terminal, the method comprising:
displaying a search box comprising a first input area and a second input area;
receiving one or more gesture inputs, among a plurality of different types of gesture inputs, through at least one of the first input area or the second input area;
determining a first function, among a plurality of different search functions, based on receiving a first type of gesture input;
displaying a search history based on the first function;
determining a second function, among a plurality of different search functions, based on receiving a second type of gesture input after displaying the search history; and
selecting a keyword on the search history and display a search result of the selected keyword based on the second function.

12. The method of claim 11, further comprising: searching for the selected at least one keyword through each of one or more search engines.

13. The method of claim 12, wherein search results of the one or more search engines through respective sections according to respective search engines or respective categories are displayed.

14. The method of claim 11, wherein the plurality of different types of gesture inputs comprises at least one of a tap, a tap & hold, a swipe down, a 2X swipe down, and a drag, and the first type of gesture input is different from the second type of gesture input.

15. A non-transitory computer-readable storage medium storing a User Interface (UI) program that, when executed, causes at least one processor to perform the method of any one of claims 11 to 14.
